# EUROPEAN PATENT APPLICATION

(11) **EP 2 814 228 A1**
(43) Date of publication of application: **17.12.2014**
(21) Application number: 13171922.1
(22) Date of filing: 13.06.2013
(51) Int. Cl.: H04M 1/253, H04M 1/2745, H04M 1/725

(54) **Method and apparatus for automatically selecting an outbound-call modality**

(71) Applicant: BlackBerry Limited, Waterloo, ON N2K 0A7 (CA)
(72) Inventor: Fields, Gregory Jason, Waterloo, Ontario N2L 3W8 (CA)
(74) Representative: Hibbert, Juliet Jane Grace

(57) **Abstract**

A portable electronic device has a plurality of different outbound-call modalities. By one approach this device includes a control circuit configured to automatically select use of a particular one of the outbound-call modalities when initiating a particular call to a particular party. This automatic selection can be based, in whole or in part, upon locally-stored information and/or remotely-accessed information. By one approach the locally-stored information comprises information regarding first evaluation criteria by which relative appropriateness of using a given one of the outbound-call modalities is determined. By one approach the remotely-accessed information comprises information regarding second evaluation criteria by which relative appropriateness of using a given one of the outbound-call modalities is determined.

## Description

### Field of Technology

The present disclosure relates to electronic devices having outbound-call capabilities, and more particularly, to portable electronic devices having a plurality of available outbound-call capabilities.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, so-called smartphones, wireless personal digital assistants (PDAs), and laptop and tablet/pad-styled computers with wireless 802.11/16 or Bluetooth capabilities.

With continued increased miniaturization as well as increased ubiquity of various kinds of wireless access points, portable electronic devices often have two or more call modalities (i.e., differing ways to make a call such as a cellular telephony modality, various voice over Internet (VoIP)-based modalities (including but not limited to Skype^{™} calls and the like), and so forth). These different call modalities often offer (or suffer from) differences with respect to call quality, cost, simultaneous availability for all call participants, and so forth.

When seeking to originate an out-bound call, the user of such a device must typically either utilize a default out-bound call modality for the device or choose from amongst the various available out-bound call modalities for that device. In either case the result can be selection and use of an out-bound call modality that is less than optimum by any of a number of objective and/or subjective measures.

### Brief Description of the Drawings

FIG. 1 is a block diagram in accordance with the disclosure.

FIG. 2 is a flow diagram in accordance with the disclosure.

### Detailed Description

The following describes an apparatus and method pertaining to a portable electronic device having a plurality of different outbound-call modalities. By one approach this device includes a control circuit configured to automatically select use of a particular one of the outbound-call modalities when initiating a particular call to a particular party. This automatic selection can be based, in whole or in part, upon locally-stored information and/or remotely-accessed information.

By one approach the locally-stored information comprises information regarding first evaluation criteria by which relative appropriateness of using a given one of the outbound-call modalities is determined. Examples in these regards include, but are not limited to:
information regarding presently available outbound-call modalities;
information from a contacts list as pertains to the particular party;
information regarding at least one contact-specific call-modality preference;
information regarding at least one user-specified call-modality preference;
information regarding a call modality last used by the particular party when calling the apparatus; and/or
information regarding available call quality for at least some of the outbound-call modalities.

By one approach the remotely-accessed information comprises information regarding second evaluation criteria by which relative appropriateness of using a given one of the outbound-call modalities is determined. Examples in these regards include, but are not limited to:
information regarding calendar entries for the particular party;
information regarding at least one of date and time as pertains to the particular party;
information regarding call modalities that are commonly-registered with the particular party;
information regarding present locomotion of the particular party; and/or
information regarding a present location of the particular party.

So configured, the portable electronic device can automatically determine, in a very flexible and adaptive manner, which of a variety of outbound-call modalities to utilize when a user of the device takes action to initiate a call to a particular party. This automated determination, in turn, frees the user from having to make independent determinations regarding which outbound-call modalities are presently available (for both ends of the call, for example) and which of the available outbound-call modalities are best suited to current conditions, circumstances, and needs.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

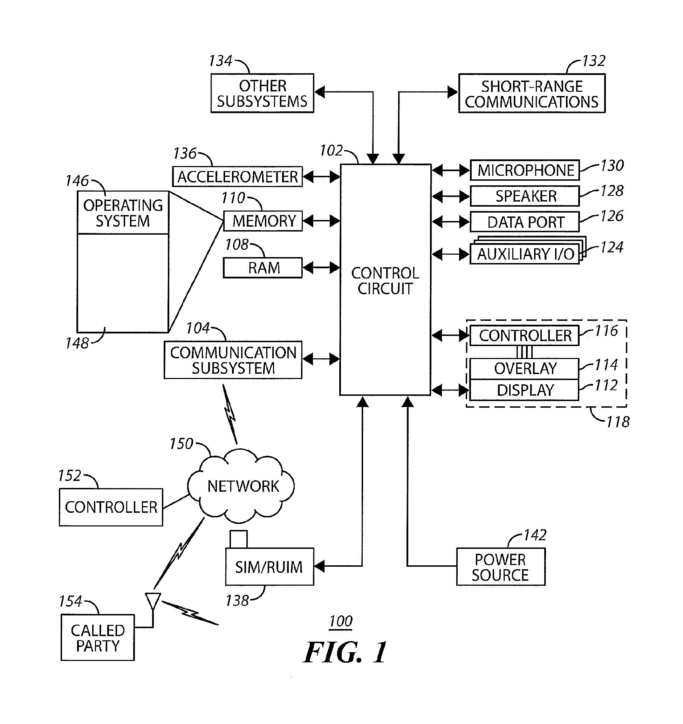

These teachings are particularly useful (though not exclusively so) when applied in conjunction with portable electronic devices that comprise portable communication devices. For the sake of an illustrative example FIG. 1 presents an exemplary portable electronic device 100. It will be understand that no particular limitations are intended by way of the specificity of this example.

In this particular illustrative example the portable electronic device 100 comprises a portable communications device. This portable electronic device 100 includes a control circuit 102 that controls the overall operation of the portable electronic device. Such a control circuit 102 can comprise a fixed-purpose hard-wired platform or can comprise a partially or wholly programmable platform. These architectural options are well known and understood in the art and require no further description here. This control circuit 102 is configured (for example, by using corresponding programming as will be well understood by those skilled in the art) to carry out one or more of the steps, actions, and/or functions described herein.

Corresponding communication functions, including data and voice communications, are performed through a communication subsystem 104. The communication subsystem receives messages from and sends messages to a wireless network 150.

The wireless network 150 may be any type of wireless network, including, but not limited to, a wireless data networks, a wireless voice network, or a network that supports both voice and data communications. The control circuit 102 may also operably couple to a short-range communication subsystem 132 (such as an 802.11 or 802.16-compatible transceiver and/or a Bluetooth^{™}-compatible transceiver). To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into a memory 110.

This memory 110 can serve, for example, to non-transitorily store the computer instructions that, when executed by the control circuit 102, causes the control circuit 102 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as an erasable programmable read-only memory (EPROM).)

A power source 142, such as one or more rechargeable batteries or a port to an external power supply, powers the portable electronic device 100. The control circuit 102 may interact with an accelerometer 136 that may be utilized to detect direction of gravitational forces or gravity-induced reaction forces. The control circuit 102 also interacts with a variety of other components, such as a Random Access Memory (RAM) 108, an auxiliary input/output (I/O) subsystem 124, a data port 126, a speaker 128, a microphone 130, and other device subsystems 134 of choice.

A display 112 can be disposed in conjunction with a touch-sensitive overlay 114 that operably couples to an electronic controller 116. Together these components can comprise a touch-sensitive display 118 that serves as a graphical-user interface. Information, such as text, characters, symbols, images, icons, and other items may be displayed on the touch-sensitive display 118 via the control circuit 102.

The touch-sensitive display 118 may employ any of a variety of corresponding technologies including but not limited to capacitive, resistive, infrared, surface acoustic wave (SAW), strain gauge, optical imaging, dispersive signal technology, and/or acoustic pulse recognition-based touch-sensing approaches as are known in the art. If the touch-sensitive display 118 should utilize a capacitive approach, for example, the touch-sensitive overlay 114 can comprise a capacitive touch-sensitive overlay 114. In such a case the overlay 114 may be an assembly of multiple stacked layers including, for example, a substrate, a ground shield layer, a barrier layer, one or more capacitive touch sensor layers separated by a substrate or other barrier, and a cover. The capacitive touch sensor layers may comprise any suitable material, such as indium tin oxide (ITO).

One or more touches, also known as touch contacts or touch events, may be detected by the touch-sensitive display 118. The control circuit 102 may determine attributes of the touch, including a location of a touch. Touch location data may include data for an area of contact or data for a single point of contact, such as a point at or near a center of the area of contact. Generally speaking, a swipe is a touch that begins at one location on the touch-sensitive display 118 and ends at another location (as when the user places their fingertip on the touch-sensitive display 118 and then drags their fingertip along the surface of the touch-sensitive display 118 before finally lifting their fingertip from that surface).

The portable electronic device 100 includes an operating system 146 and software programs, applications, or components 148 that are executed by the control circuit 102 and are typically stored in a persistent, updatable store such as the aforementioned memory 110. Additional applications or programs may be loaded onto the portable electronic device 100 through the wireless network 150, the auxiliary I/O subsystem 124, the data pon 126, the short-range communications subsystem 132, or any other suitable subsystem 134.

As a communication device, a received signal such as a text message, an e-mail message, or web page download is processed by the communication subsystem and input to the control circuit 102. The control circuit 102 processes the received signal for output to the display 112 and/or to the auxiliary I/O subsystem 124. A user may generate data items, for example e-mail messages, that may be transmitted over the wireless network 150 through the communication subsystem. For voice communications, the overall operation of the portable electronic device is similar. The speaker 128 outputs audible information converted from electrical signals, and the microphone 130 converts audible information into electrical signals for processing.

In this illustrative example the portable electronic device 100 has a plurality of differing outbound-call modalities. As used herein, the expression "outbound-call modalities" will be understood to refer to the various technologies, protocols, and methodologies by which the portable electronic device 100 initiates and then conducts a call to another device. A "call," in turn, will be understood to comprise a multi-way (such as a two-way or three-way) communication link and session. Outbound-call modalities can differ from one another, for example, with respect to their employed modulation, signaling protocol(s), carrier(s), frequency hopping scheme, time division multiplexing, frequency division multiplexing, code division multiplexing, service provider, CODEC, compression, encryption, and so forth.

As a more specific example, a given portable electronic device 100 may have the present capability of sourcing an outbound call via any of a particular cellular telephony voice service, a particular cellular telephony data service, and Wi-Fi (A, B, G, and N) (including Blackberry MVS service which automatically selects Wi-Fi-based two-communications when available). In addition, as regards the use of Wi-Fi, the given portable electronic device 100 is programmed to support a variety of Wi-Fi-based outbound-call modalities such as Skype^{™}. FIG. 1 also illustrates that the portable electronic device 100 can communicate with a controller 152 (via, for example, the aforementioned network 150). Examples in these regards are provided further herein. And lastly, FIG. 1 depicts a particular called party 154 whom the portable electronic device 100 calls per the present teachings. And again, further examples and details in these regards are provided further below as well.

By one approach, the aforementioned control circuit 102 has access to information that the control circuit 102 can use to select the use of a particular one of the available outbound-call modalities when initiating a particular call to a particular party. This information can be locally stored, for example, in one or more of the aforementioned memories and/or can be obtained (either at a time of need or earlier as desired) from a remote source such as the aforementioned controller 152.

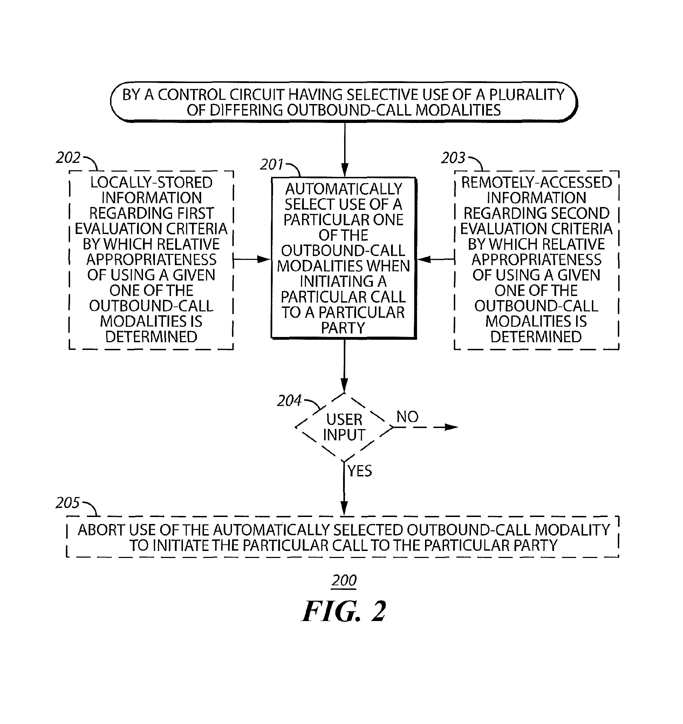

With reference to FIG. 2, by one approach the locally-stored information 202 can comprise information regarding first evaluation criteria by which the relative appropriateness of using a given one of the aforementioned outbound-call modalities is determined. Examples in these regards include, but are not limited to:
information regarding presently available outbound-call modalities (such as, for example, which outbound-call modalities are presently available for use, the cost of using given ones of the outbound-call modalities, and so forth);
information from a contacts list as pertains to the particular party (such as,
for example, which call modalities are available to (and/or preferred by) various parties contained in the contacts list;
information regarding at least one contact-specific call-modality preference (such as, for example, that a given party prefers one call modality (such as cellular telephony) between the hours of 9 AM and 5 PM and prefers another call modality (such as Wi-Fi-based Skype) at all other times);
information regarding at least one user-specified call-modality preference (such as, for example, that the user (of the calling device) prefers to use a Wi-Fi-based Voice Over Internet (VoIP) call modality (or a specific VoIP service, such as Skype) when calling a contact who resides in another country);
information regarding a call modality last used by the particular party when calling a given apparatus (such as a particular device such as a cellular phone, a tablet/pad-styled device, a desktop computer, and so forth); and/or
information regarding available call quality for at least some of the outbound-call modalities (as measured, for example, using received signal strength measurements, bit error rate measurements, and so forth).

With continued reference to FIG. 2, by one approach (in lieu of the foregoing information regarding first evaluation criteria or in combination therewith) the aforementioned remotely-accessed information 203 can comprise information regarding second evaluation criteria by which the relative appropriateness of using a given one of the available outbound-call modalities can be determined. Examples in these regards include, but are not limited to:
information regarding calendar entries for the particular party (which entries might indicate, for example, a particular geographic location for the party at a particular time, which location might in turn serve to influence or
otherwise inform a decision regarding which call modality to employ at a given time);
information regarding at least one of date and time as pertains to the particular party (such as days and hour of the day when the particular party is likely to be at a particular location or accessible via a particular call modality or not accessible via a particular call modality);
information regarding call modalities that are commonly-registered with the particular party;
information regarding present locomotion of the particular party (such as whether the particular party is in a moving automobile or on an aircraft (which may or may not have Wi-Fi service); and/or information regarding a present geographic and/or logical location of the particular party.

This remotely-stored information 202 can be stored, for example, at the aforementioned controller 152. The controller 152, in turn, can gather this information over time from various communication platforms via any of a variety of pull and/or push methodologies as desired. By one approach the controller 152 collects at least some of this information on some periodic or non-periodic basis but other than at a time of need. By another approach, the controller 152 gathers at least some of the described information at a time of need (for example, upon being informed by the control circuit 102 that an outbound call to the particular party is likely imminent).

So configured, the aforementioned control circuit 102 can use one, the other, or both of the above-described evaluation criteria to inform, at least in part, the automatic selection of a particular one of the presently-available outbound-call modalities when initiating a particular call to a particular party. These teachings are highly flexible in these regards and will accommodate, for example, using at least one, at least three, or all of the aforementioned information regarding the first evaluation criteria and/or the second evaluation criteria as desired.

By applying these teachings, and by way of an illustrative example, a user can simply click on the name, image, avatar, or other identifier as corresponds to a contact in their contacts list when they wish to call that party. The corresponding device, upon detecting that click, can then employ these teachings to automatically select the use of a particular outbound-call modality when initiating that call to the selected contact. The user has the convenience and satisfaction of initiating a call to a desired party without giving any thought or concern to how that the device initiates that call with respect to a particular employed outbound-call modality. At the same time, the selection can be based upon any of a variety of evaluation criteria to thereby reflect various preferences and/or requirements of the user, the called party, and so forth.

That said, it is possible that the control circuit 102 may select a particular outbound-call modality that does not meet the user's present wishes. To account for such a circumstance, by one optional approach the control circuit 102 can detect a user's input (at 204) and respond at 205 by aborting use of the automatically selected outbound-call modality to initiate that particular call to the particular party. (In the absence of detecting a user's input this process can accommodate any of a variety of responses. Examples of responses can include temporal multitasking (pursuant to which the control circuit conducts other tasks before returning to again monitor for a user input) as well as continually looping back to essentially continuously monitor for the user's input(s). These teachings also accommodate supporting this detection activity via a real-time interrupt capability.)

The aforementioned user input can comprise, for example, a corresponding displayed touch-screen button. When halting use of the automatically selected outbound-call modality, by one approach the control circuit 102 can simply terminate the call initiation process pending further instructions from the user. By another approach the control circuit 102 can automatically switch to a different outbound-call modality. This alternative outbound-call modality can comprise, by one approach, a default modality that the user previously selected (or the device manufacturer defined). Or, if desired, this alternative outbound-call modality can be dynamically determined. For example, when the user aborts use of a highest-scoring outbound-call modality the control circuit 102 can automatically switch to using the second highest-scoring outbound-call modality to initiate the call to the particular party.

These teachings can be economically fielded and will scale readily to accommodate and use and many, or as few, evaluation criteria as may be appropriate to suit the needs of and/or the opportunities provided by a particular application setting. These teachings will also accommodate a variety of alterations and modifications. As one example in these regards, the described functionality can be made selectably active to permit a user to decide when to permit the control circuit 102 to exercise the described capability.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus having a plurality of differing outbound-call modalities, the apparatus comprising:
a control circuit (102) configured to automatically select use (201) of a particular one of the outbound-call modalities when initiating a particular call to a particular party as a function, at least in part, of:
- locally-stored information (202) regarding first evaluation criteria by which relative appropriateness of using a given one of the outbound-call modalities is determined; and
- remotely-accessed information (203) regarding second evaluation criteria by which relative appropriateness of using a given one of the outbound-call modalities is determined.

2. The apparatus of claim 1 wherein the locally-stored information includes at least one of:
information regarding presently available outbound-call modalities;
information from a contacts list as pertains to the particular party;
information regarding at least one contact-specific call-modality preference;
information regarding at least one user-specified call-modality preference;
information regarding a call modality last used by the particular party when calling the apparatus;
information regarding available call quality for at least some of the outbound-call modalities.

3. The apparatus of claim 2 wherein the locally-stored information includes at least three of:
information regarding presently available outbound-call modalities;
information from a contacts list as pertains to the particular party;
information regarding at least one contact-specific call-modality preference;
information regarding at least one user-specified call-modality preference;
information regarding a call modality last used by the particular party when calling the apparatus;
information regarding available call quality for at least some of the outbound-call modalities.

4. The apparatus of claim 3 wherein the locally-stored information includes each of:
information regarding presently available outbound-call modalities;
information from a contacts list as pertains to the particular party;
information regarding at least one contact-specific call-modality preference;
information regarding at least one user-specified call-modality preference;
information regarding a call modality last used by the particular party when calling the apparatus;
information regarding available call quality for at least some of the outbound-call modalities.

5. The apparatus of claim 1 wherein the remotely-accessed information includes at least one of:
information regarding calendar entries for the particular party;
information regarding at least one of date and time as pertains to the particular party;
information regarding call modalities that are commonly-registered with the particular party;
information regarding present locomotion of the particular party;
information regarding a present location of the particular party.

6. The apparatus of claim 5 wherein the remotely-accessed information includes at least three of:
information regarding calendar entries for the particular party;
information regarding at least one of date and time as pertains to the particular party;
information regarding call modalities that are commonly-registered with the particular party;
information regarding present locomotion of the particular party;
information regarding a present location of the particular party.

7. The apparatus of claim 6 wherein the remotely-accessed information includes each of:
information regarding calendar entries for the particular party;
information regarding at least one of date and time as pertains to the particular party;
information regarding call modalities that are commonly-registered with the particular party;
information regarding present locomotion of the particular party;
information regarding a present location of the particular party.

8. The apparatus of claim 1 wherein the control circuit is further configured to:
abort (205) use of the automatically selected outbound-call modality to initiate the particular call to the particular party in response to a detected user input (204).

9. A method having a plurality of differing outbound-call modalities, the method comprising:
by a control circuit (102) having selective use of a plurality of differing outbound-call modalities:
automatically selecting use (201) of a particular one of the outbound-call modalities when initiating a particular call to a particular party as a function, at least in part, of:
- locally-stored information (202) regarding first evaluation criteria by which relative appropriateness of using a given one of the outbound-call modalities is determined; and
- remotely-accessed information (203) regarding second evaluation criteria by which relative appropriateness of using a given one of the outbound-call modalities is determined.

10. The method of claim 9 wherein the locally-stored information includes at least one of:
information regarding presently available outbound-call modalities;
information from a contacts list as pertains to the particular party;
information regarding at least one contact-specific call-modality preference;
information regarding at least one user-specified call-modality preference;
information regarding a call modality last used by the particular party when calling the method;
information regarding available call quality for at least some of the outbound-call modalities.

11. The method of claim 10 wherein the locally-stored information includes at least three of:
information regarding presently available outbound-call modalities;
information from a contacts list as pertains to the particular party;
information regarding at least one contact-specific call-modality preference;
information regarding at least one user-specified call-modality preference;
information regarding a call modality last used by the particular party when calling the method;
information regarding available call quality for at least some of the outbound-call modalities.

12. The method of claim 11 wherein the locally-stored information includes each of:
information regarding presently available outbound-call modalities;
information from a contacts list as pertains to the particular party;
information regarding at least one contact-specific call-modality preference;
information regarding at least one user-specified call-modality preference;
information regarding a call modality last used by the particular party when calling the method;
information regarding available call quality for at least some of the outbound-call modalities.

13. The method of claim 10 wherein the remotely-accessed information includes at least one of:
information regarding calendar entries for the particular party;
information regarding at least one of date and time as pertains to the particular party;
information regarding call modalities that are commonly-registered with the particular party;
information regarding present locomotion of the particular party;
information regarding a present location of the particular party.

14. The method of claim 13 wherein the remotely-accessed information includes at least three of:
information regarding calendar entries for the particular party;
information regarding at least one of date and time as pertains to the particular party;
information regarding call modalities that are commonly-registered with the particular party;
information regarding present locomotion of the particular party;
information regarding a present location of the particular party.

15. The method of claim 9 further comprising:
aborting use (204) of the automatically selected outbound-call modality to initiate the particular call to the particular party in response to a detected user input (205).
